(19) **Europäisches Patentamt / European Patent Office / Office européen des brevets**

(11) **EP 4 426 034 A1**

(12) **EUROPEAN PATENT APPLICATION**
published in accordance with Art. 153(4) EPC

(43) Date of publication:
04.09.2024 Bulletin 2024/36

(21) Application number: 22900298.5

(22) Date of filing: 18.11.2022

(51) International Patent Classification (IPC):
*H04W 72/04* $^{(2023.01)}$

(52) Cooperative Patent Classification (CPC):
H04B 7/185; H04W 72/04; H04W 72/044;
H04W 72/30; H04W 72/53; Y02D 30/70

(86) International application number:
PCT/CN2022/132938

(87) International publication number:
WO 2023/098493 (08.06.2023 Gazette 2023/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.11.2021 CN 202111449656

(71) Applicant: Huawei Technologies Co., Ltd.
Shenzhen, Guangdong 518129 (CN)

(72) Inventors:
• KONG, Chuili
  Shenzhen, Guangdong 518129 (CN)
• CHEN, Ying
  Shenzhen, Guangdong 518129 (CN)
• QIAO, Yunfei
  Shenzhen, Guangdong 518129 (CN)
• WANG, Yu
  Shenzhen, Guangdong 518129 (CN)

(74) Representative: MERH-IP Matias Erny Reichl
Hoffmann
Patentanwälte PartG mbB
Paul-Heyse-Strasse 29
80336 München (DE)

(54) **BROADCAST BEAM SCANNING METHOD AND COMMUNICATION APPARATUS**

(57) Embodiments of this application provide a broadcast beam scanning method and a communication apparatus. A satellite divides all beam positions in a coverage area of the satellite into K beam position groups based on population density of the beam positions in the coverage area of the satellite, where the K beam position groups are in a one-to-one correspondence with K broadcast beams of the satellite, K is an integer greater than 1, a quantity of beam positions included in a first beam position group is inversely proportional to population density in the first beam position group, the first beam position group is any one of the K beam position groups, and the first beam position group includes at least one beam position. The satellite sequentially performs beam scanning on the beam positions in the first beam position group by using a first broadcast beam corresponding to the first beam position group. In this method, a scanning area of a broadcast beam may be adaptively adjusted based on the population density in the coverage area of the satellite, to ensure that quick access can be performed in an area with high population density.

S201. A satellite divides all beam positions in a coverage area of the satellite into K beam position groups based on population density of the beam positions in the coverage area of the satellite, where the K beam position groups are in a one-to-one correspondence with K broadcast beams of the satellite

S202. The satellite sequentially performs beam scanning on beam positions in a first beam position group by using a first broadcast beam corresponding to the first beam position group

FIG. 2

## Description

This application claims priority to Chinese Patent Application No. 202111449656.8, filed with the China National Intellectual Property Administration on November 30, 2021 and entitled "BROADCAST BEAM SCANNING METHOD AND COMMUNICATION APPARATUS", which is incorporated herein by reference in its entirety.

## TECHNICAL FIELD

Embodiments of this application relate to the satellite network, and more specifically, to a broadcast beam scanning method and a communication apparatus.

## BACKGROUND

A non-terrestrial network (non-terrestrial network, NTN) such as satellite communication has significant advantages such as global coverage, long-distance transmission, flexible networking, convenient deployment, and no limitation from a geographical condition, and is widely used in a plurality of fields such as maritime communication, positioning and navigation, disaster relief, a scientific experiment, video broadcasting, and earth observation.

A current new radio (new radio, NR) beam scanning solution is not applicable to an NTN system. In an NR system, because a coverage angle of each beam is limited, scanning is performed by using a plurality of beams to cover a service range of an entire cell. Beam scanning means that synchronization signal blocks (synchronization signal and PBCH block, SSB) are sent by using beams in different directions at different moments. SSBs required for completing one beam scanning form an SSB burst set. Each SSB in the SSB burst set is sent in different directions at different moments, to cover the cell. In the NTN system, coverage of a broadcast beam is performed based on a beam position, to be specific, the broadcast beam needs to periodically poll and scan all beam positions in a coverage area to deliver a broadcast message. A coverage area of a satellite is large, the coverage area includes a large quantity of beam positions, and a capability of a satellite payload is limited. Usually, a quantity of broadcast beams is far less than a quantity of beam positions. Therefore, the broadcast beam needs to poll all the beam positions for time division coverage. As a result, the satellite cannot be quickly accessed in an area with high population density.

## SUMMARY

Embodiments of this application provide a broadcast beam scanning method and a communication apparatus. A scanning area of a broadcast beam may be adaptively adjusted based on population density in a coverage area of a satellite, to ensure that quick access can be performed in an area with high population density.

According to a first aspect, a broadcast beam scanning method is provided. The method may be performed by a satellite, or may be performed by a component (for example, a chip or a circuit) of the satellite. This is not limited herein. For ease of description, an example in which the method is performed by the satellite is used below for description.

The method may include: The satellite divides all beam positions in a coverage area of the satellite into K beam position groups based on population density of the beam positions in the coverage area of the satellite, where the K beam position groups are in a one-to-one correspondence with K broadcast beams of the satellite, K is an integer greater than 1, a quantity of beam positions included in a first beam position group is inversely proportional to population density in a coverage area of the first beam position group, the first beam position group is any one of the K beam position groups, and the first beam position group includes at least one beam position. The satellite sequentially performs beam scanning on the beam positions in the first beam position group by using a first broadcast beam corresponding to the first beam position group.

In the foregoing solution, a coverage area of a broadcast beam of the satellite may be adaptively adjusted based on the population density in the coverage area of the satellite, to ensure that quick access can be performed in an area with high population density. It may be understood that, for a beam position group with high population density (that is, a scanning area of a broadcast beam corresponding to the beam position group), a quantity of beam positions is small, a scanning periodicity of the broadcast beam corresponding to the beam position group is short, and an access delay is low. For a beam position group with low population density, a quantity of beam positions is large, a scanning periodicity of a broadcast beam corresponding to the beam position group is long, and an access delay is high.

With reference to the first aspect, in some implementations of the first aspect, a quantity of broadcast beam scanning periodicities maintained by the satellite is greater than or equal to 1 and less than or equal to K, a scanning periodicity of the first broadcast beam is m*t, m is the quantity of beam positions included in the first beam position group, t is a time required for scanning one beam position by using the first broadcast beam, and t is greater than 0.

In the foregoing technical solution, because one satellite has a plurality of broadcast beams, and quantities of beam positions included in beam position groups corresponding to the broadcast beams may be different, scanning periodicities of the broadcast beams may also be different. Therefore, the satellite may maintain one or more broadcast beam periodicities.

With reference to the first aspect, in some implementations of the first aspect, the method further includes: The satellite re-plans a mapping relationship between the K broadcast beams and all the beam positions in the coverage area of the satellite based on the population density in the coverage area of the satellite and/or access success rates of beam positions corresponding to the K broadcast beams.

With reference to the first aspect, in some implementations of the first aspect, that the satellite re-plans a mapping relationship between the K broadcast beams and all the beam positions of the satellite based on the population density in the coverage area of the satellite includes: When a change ratio of population density in a coverage area of the first beam position group at a moment t1 to that at a moment t0 is greater than or equal to a first threshold, the satellite re-plans the mapping relationship between the K broadcast beams and all the beam positions in the coverage area of the satellite, where t1 is greater than t0.

With reference to the first aspect, in some implementations of the first aspect, a synchronization signal block SSB burst set periodicity of the first broadcast beam is greater than or equal to the scanning periodicity of the first broadcast beam.

With reference to the first aspect, in some implementations of the first aspect, the SSB burst set periodicity of the first broadcast beam is predefined in a protocol.

With reference to the first aspect, in some implementations of the first aspect, the method further includes: The satellite sends a first broadcast signal in a first beam position by using the first broadcast beam, where the first broadcast signal includes a first synchronization signal block SSB, a CORESET #0 corresponding to the first SSB, and a physical downlink shared channel PDSCH, and the first beam position is any beam position in the first beam position group.

In the foregoing technical solution, after receiving an SSB, a user of each beam may receive the CORESET #0 and a SIB1 carried on the PDSCH without waiting for a next scanning periodicity, and after obtaining access-related information in the SIB1, send a preamble (preamble) by using an uplink beam, to complete a subsequent access procedure. In this way, an access delay can be reduced. In addition, a next beam position is switched to after the SSB, the CORESET #0, and the SIB 1 carried on the PDSCH are sent in a beam position. Because a lighting time in a beam position is at an ms level, a beam switching unit of the satellite may have sufficient time to complete beam direction determining, phase calculation of a phase shifter, phase transmission of the phase shifter, and validation on a phase shifter of an antenna at a radio frequency. In other words, a beam switching time does not need to be at an ns level, which facilitates hardware implementation.

With reference to the first aspect, in some implementations of the first aspect, when the satellite, a first satellite, and a central point location of the first beam position form a straight line, where the satellite is a non-geosynchronous orbit NGSO satellite, the first satellite is a geostationary orbit GEO satellite, and the first beam position is any beam position in the first beam position group, the method further includes: The satellite scans a second beam position in the first beam position group based on a synchronization signal block SSB scanning pattern of the first broadcast beam, where the second beam position and the first beam position are different beam positions. Alternatively, the satellite disables the first broadcast beam in a time period of scanning the first beam position. Alternatively, the satellite sends first indication information to a terminal device in the first beam position, where the first indication information includes a first time, the first time indicates the terminal device to send a random access preamble after the first time passes after the terminal device receives the first indication information, and the terminal device is located in the first beam position.

With reference to the first aspect, in some implementations of the first aspect, the satellite predicts that an SSB sent by using the first broadcast beam in the first beam position is an invalid SSB, the first beam position is any beam position in the first beam position group, and the method further includes: The satellite disables the first broadcast beam in the time period of scanning the first beam position. Alternatively, the satellite scans a beam position in the first beam position group other than the first beam position by using the first broadcast beam.

It should be understood that any one of the foregoing implementations of the first aspect may also be used as an independent implementation.

According to a second aspect, a communication apparatus is provided. The apparatus is configured to perform the method according to the first aspect. Specifically, the apparatus may include units and/or modules configured to perform the method according to any one of the first aspect or the possible implementations of the first aspect, for example, a processing unit and/or a communication unit.

In an implementation, the apparatus is a satellite. When the apparatus is the satellite, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a satellite. When the apparatus is the chip, the chip system, or the circuit used in the satellite, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a third aspect, a communication apparatus is provided. The apparatus includes at least one processor, the at least one processor is coupled to at least one memory, the at least one memory is configured to store a computer program or instructions, and the at least one processor is configured to: invoke the computer program or the instructions from the at least one memory and run the computer program or the instructions, so that the communication apparatus performs the method according to any one of the first aspect or the implementations of the first aspect.

In an implementation, the apparatus is a satellite.

In another implementation, the apparatus is a chip, a chip system, or a circuit used in a satellite.

According to a fourth aspect, this application provides a processor, configured to perform the method according to the foregoing aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a fifth aspect, a computer-readable storage medium is provided. The computer-readable storage medium stores program code executed by a device, and the program code includes the method according to any one of the first aspect or the implementations of the first aspect.

According to a sixth aspect, a computer program product including instructions is provided. When the computer program product runs on a computer, the computer is enabled to perform the method according to any one of the first aspect or the implementations of the first aspect.

According to a seventh aspect, a chip is provided. The chip includes a processor and a communication interface, and the processor reads, through the communication interface, instructions stored in a memory, to perform the method according to any one of the first aspect or the implementations of the first aspect.

Optionally, in an implementation, the chip further includes a memory. The memory stores a computer program or instructions, the processor is configured to execute the computer program or the instructions stored in the memory, and when the computer program or the instructions are executed, the processor is configured to perform the method according to any one of the first aspect or the implementations of the first aspect.

## BRIEF DESCRIPTION OF DRAWINGS

FIG. 1 is a schematic diagram of a multi-beam mobile satellite communication system applicable to an embodiment of this application;

FIG. 2 is a schematic diagram of a broadcast beam scanning method according to this application;

FIG. 3 is a schematic diagram of broadcast beam scanning performed by a satellite;

FIG. 4A and FIG. 4B are a schematic diagram of an SSB scanning pattern of a broadcast beam in an NR system;

FIG. 5 is a schematic diagram of an SSB scanning pattern of a broadcast beam in an NTN system according to this application;

FIG. 6 is a schematic diagram in which a GEO satellite, an LEO satellite, and a central point of an interference beam position form a straight line;

FIG. 7 is a schematic diagram of an included angle $\theta$ formed when a connection line between a central point of an interference beam position and an LEO satellite deviates from a GEO satellite;

FIG. 8 is a schematic diagram in which a satellite sends an invalid SSB to UE in a beam position at an edge of a coverage area;

FIG. 9 is a schematic block diagram of a communication apparatus 1000 according to this application; and

FIG. 10 is a schematic diagram of a structure of a communication apparatus 10 according to this application.

## DESCRIPTION OF EMBODIMENTS

The following describes technical solutions of this application with reference to accompanying drawings.

The technical solutions of this application may be used in a non-terrestrial network (non-terrestrial network, NTN) system such as a satellite communication system or a high altitude platform station (high altitude platform station, HAPS) communication system, for example, an integrated communication and navigation (integrated communication and navigation, ICaN) system or a global navigation satellite system (global navigation satellite system, GNSS).

The satellite communication system can be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system.

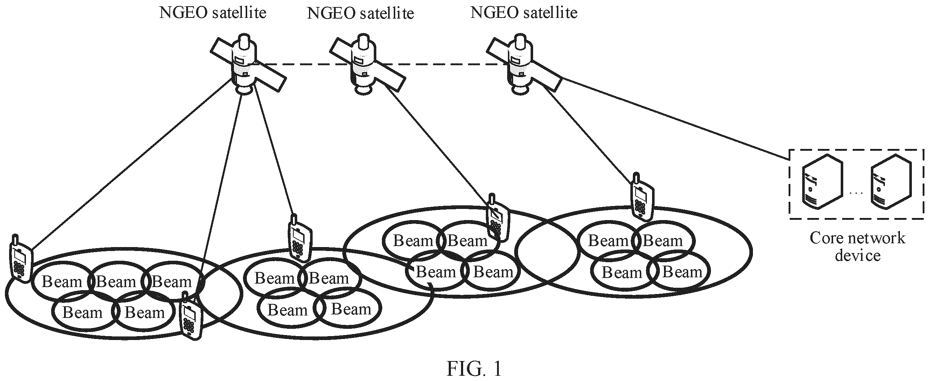

FIG. 1 is a schematic diagram of a multi-beam mobile satellite communication system applicable to an embodiment of this application. As shown in FIG. 1, a satellite provides a communication service for a terminal device through a plurality of beams. The satellite in this scenario is a non-geostationary orbit (non-geostationary earth orbit, NGEO) satellite, and the satellite is connected to a core network device. The satellite uses a plurality of beams to cover a service area, and different beams may perform communication in one or more of time division, frequency division, and space division. The satellite provides communication and navigation services for the terminal device by broadcasting a communication signal and a navigation signal. Alternatively, the satellite mentioned in this embodiment of this application may be a satellite base station or a network-side device mounted on a satellite.

The terminal device mentioned in this embodiment of this application includes various handheld devices, vehicle-mounted devices, wearable devices, or computing devices that have a wireless communication function, or other processing devices connected to a wireless modem, and may be specifically user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

Terms used in this application are first briefly described, to help understand embodiments of this application.

1. SSB: includes a primary synchronization signal (primary synchronization signal, PSS), a secondary synchronization signal (secondary synchronization signal, SSS), and a physical broadcast channel (physical broadcast channel, PBCH), and provides, for UE, downlink synchronization of a cell and basic configuration information of the cell. The PBCH carries a master information block (master information block, MIB) of the cell, and the MIB indicates whether a system information block type 1 (system information block type 1, SIB1) exists. The SSB appears regularly in frequency domain, that is, the SSB may appear at a specific interval. After the UE is powered on, the UE may search for a cell at the interval.

2. NR beam scanning: A frequency in NR is higher, and a transmission loss of a highfrequency carrier is large. Therefore, beamforming needs to be performed to increase a transmission distance of a wireless signal. Because a coverage angle of each beam is limited, scanning is performed by using a plurality of beams in NR to cover a service range of an entire cell. Beam scanning means that physical channels or reference signals are sent by using beams in different directions at different moments. A plurality of SSBs usually need to be sent in one cell to complete one beam scanning. A maximum of 64 beams in directions can be configured for the SSB.

3. SSB burst set: SSBs required for completing one beam scanning form an SSB burst set. Each SSB in the SSB burst set is sent in different directions at different moments, to cover a cell. All SSBs in an SSB burst set need to be sent in a same half frame (5 ms). In other words, a base station needs to complete scanning of an entire coverage area within 5 ms. A periodicity of the SSB burst set may be 5 ms, 10 ms, 20 ms, 40 ms, 80 ms, or 160 ms, and this periodicity is indicated in a SIB1. If UE does not receive the SIB1 during initial cell search, the UE searches for SSBs in a periodicity of 20 ms by default.

In an NTN system, coverage of a broadcast beam is performed based on a beam position, to be specific, the broadcast beam needs to periodically poll and scan all beam positions in a coverage area to deliver a broadcast message. In the NTN system, problems that have not been encountered in an original NR system exist. For example, (1) a coverage area of a satellite is large, the coverage area includes a large quantity of beam positions, and a capability of a satellite payload is limited. Usually, a quantity of broadcast beams is far less than a quantity of beam positions. Therefore, the broadcast beam needs to poll all the beam positions for time division coverage; (2) scanning of the entire coverage area cannot be completed within 5 ms; and (3) a maximum periodicity of an SSB burst set in the NR system is 160 ms, and therefore a requirement of the NTN system may not be met.

In addition, the NTN system has new features: Feature 1: Interference avoidance problem of a geosynchronous orbit (geosynchronous earth orbit, GSO): AGSO satellite and a non-GSO (NGSO) satellite exist in space. The GSO satellite has a highest priority. The NGSO satellite, for example, a low-earth orbit (LEO, low-earth orbit) satellite, cannot interfere with the GSO satellite during deployment and design.

Feature 2: Problem caused by mobility: The satellite moves quickly, and the coverage area of the satellite changes with movement of the satellite. Abeam position may be in the coverage area at a current moment, and a broadcast message is delivered; and the beam position may not be in the coverage area at a next moment, and a downlink message cannot be delivered. Therefore, a problem that the broadcast message is invalid may be caused.

Therefore, the NTN directly reuses SSB beam scanning of the NR. There is a specific problem, and therefore corresponding adaptation design needs to be performed for the NTN system. In view of this, this application provides a broadcast beam scanning method, to adapt to SSB beam scanning in an NTN system.

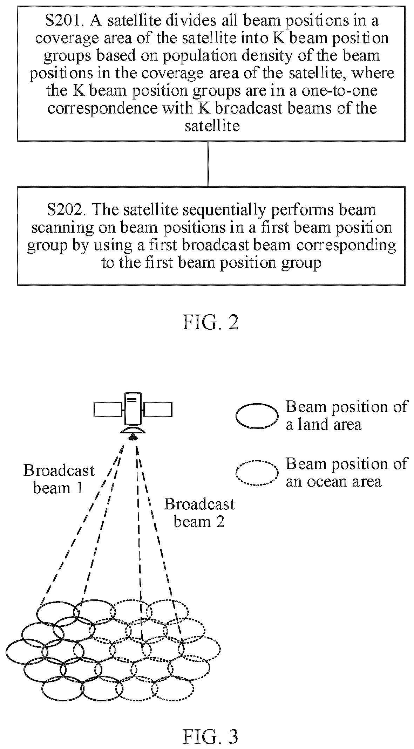

FIG. 2 is a schematic diagram of a broadcast beam scanning method according to this application.

S201. A satellite divides all beam positions in a coverage area of the satellite into K beam position groups based on population density of the beam positions in the coverage area of the satellite, where the K beam position groups are in a one-to-one correspondence with K broadcast beams of the satellite, K is an integer greater than 1, a quantity of beam positions included in a first beam position group is inversely proportional to population density in the first beam position group, the first beam position group is any one of the K beam position groups, and the first beam position group includes at least one beam position.

Optionally, the satellite obtains the population density of the beam positions in the coverage area of the satellite by using an earth population density analysis method or the like.

For ease of description, in this embodiment of this application, a beam position group served by a broadcast beam k of the satellite is denoted as a beam position group k, where $1<k \leq K$, and K is an integer.

S202. The satellite sequentially performs beam scanning on the beam positions in the first beam position group by using a first broadcast beam corresponding to the first beam position group.

After K groups of beam groups are allocated, a corresponding broadcast beam needs to poll and scan beam positions in the group. For example, if there are a total of m beam positions in a beam group k served by the broadcast beam k, the broadcast beam k polls and scans the m beam positions in sequence. Assuming that the beam positions have a same scanning time, which is denoted as t, where t is greater than 0, a time required for completing one round of scanning of all the beam positions in the group k is m*t, that is, a scanning periodicity of a broadcast beam corresponding to the beam position group k is m*t. Because one satellite has a plurality of broadcast beams, and quantities of beam positions included in beam position groups corresponding to the broadcast beams may be different, scanning periodicities of the broadcast beams may also be different. Therefore, the satellite may need to maintain one or more broadcast beam periodicities, that is, a quantity of broadcast beam scanning periodicities maintained by the satellite is greater than or equal to 1 and less than or equal to K.

For example, the satellite includes K ($K \geq 2$) broadcast beams. Assuming that a scanning time of each beam is t, a quantity of beam positions served by a beam #1 is 100, and a quantity of beam positions served by a beam #2 is 200, broadcast beam periodicities respectively corresponding to the beam #1 and the beam #2 are shown in Table 1.

**Table 1**

| Broadcast beam number | Quantity of service beam positions | Broadcast beam periodicity | Service beam position number |
|---|---|---|---|
| 1 | 100 | 100*t | 1, 2, ..., and 100 |
| 2 | 200 | 200*t | 101, 102, ..., and 300 |
| ... | ... | ... | ... |

In the foregoing solution, a scanning periodicity of a broadcast beam of the satellite may be adaptively adjusted based on the population density in the coverage area of the satellite, to ensure that quick access can be performed in an area with high population density.

It may be understood that, for a beam position group in which a beam position with high population density is located, a quantity of beam positions is small, a scanning periodicity of a broadcast beam corresponding to the beam position group is short, and an access delay is low; for a beam position group in which a beam position with low population density is located, a quantity of beam positions is large, a scanning periodicity of a broadcast beam corresponding to the beam position group is long, and an access delay is high. For example, as shown in FIG. 3, two broadcast beams are configured for a satellite, and beam positions in a coverage area of the satellite are divided into a land area and an ocean area. It can be learned that the land area has a small quantity of beam positions, and the ocean area has a large quantity of beam positions. In this scenario, when the satellite performs broadcast beam scanning, the two broadcast beams are responsible for different quantities of beam positions. In a land area with a small quantity of beam positions and high population density, one broadcast beam is allocated to reduce a scanning periodicity and an access delay. In an ocean area with a large quantity of beam positions and low population density, another broadcast beam is allocated to perform scanning. A scanning periodicity is long and an access delay is high. However, impact can be ignored in an ocean area with a small quantity of requirements.

It may be understood that, due to mobility of the satellite, the satellite further needs to adjust, in real time, beam position information corresponding to the broadcast beam. This embodiment provides two possible triggering manners:

Manner 1: Change based on population density: When population density in a coverage area of the broadcast beam k at a moment t1 significantly changes from population density at a previous moment (that is, at a moment t0), quantities of beam positions in the beam position groups corresponding to the K broadcast beams need to be adjusted in real time. For example, when a change ratio of the population density in the coverage area of the broadcast beam k at the moment t1 to that at the moment t0 is greater than or equal to a threshold X, that is, (rho_t1 - rho_t0)/rho_t0 $\geq$ X, a mapping relationship between a broadcast beam and a specific beam position is re-planned, where rho_t0 represents the population density in the coverage area of the beam position group k at the moment t0, rho_t1 represents the population density in the coverage area of the beam position group k at the moment t1, and t1 is greater than t0.

Manner 2: Collect statistics based on an access success rate: Statistics about an access success rate of a beam position in a beam position group corresponding to each broadcast beam is collected. For a broadcast beam with a low success rate, a quantity of associated beam positions is reduced. The beam positions that are no longer served by the broadcast beam are allocated to another broadcast beam with a high access success rate for service.

In addition, as described above, in the NR system, a minimum value of the SSB burst set periodicity is 5 ms, and a maximum value is 160 ms. Because there are a large quantity of beam positions in the coverage area of the satellite, and a quantity of broadcast beams is limited, a required SSB burst set periodicity may exceed 160 ms to complete scanning of the entire coverage area. For example, if the coverage area of the satellite includes 1200 beams, only one broadcast beam is configured, and a dwell time of a broadcast beam in each beam position is 2 ms, a time required for completing scanning of the entire coverage area is 2.4s, that is, the SSB burst set periodicity is far beyond a maximum range of 160 ms supported by the NR system. Therefore, the SSB burst set periodicity may be extended, to adapt to the NTN system. There may be the following two extension manners:

Manner 1: The SSB burst set periodicity of the broadcast beam is predefined in a protocol. For example, a value, for example, ms1000, ms2000, ms3000, or ms4000, may be added to a parameter ssb-periodicitieservingCell.

Manner 2: A calculation formula is added to calculate the SSB burst set periodicity. For example, a value of a parameter ssb-periodicitieservingCell may be calculated by using a calculation formula N*T, where N represents a quantity of beam positions covered by a broadcast beam, T represents a scanning time of the broadcast beam in a beam position, and the value of the parameter ssb-periodicitieservingCell is greater than or equal to N*T.

It should be noted that, each time scanning a beam position, the broadcast beam further needs to send a SIB 1 message and ephemeris information in addition to sending an SSB, to help UE in the beam position access a network. Therefore, a periodicity of the SIB1 is consistent with a periodicity of the SSB. The periodicity of the SIB1 in NR is currently scheduled in a periodicity of 160 ms. The periodicity of the SIB1 also needs to be extended to adapt to the NTN network. For an extension method, refer to the extension manners 1 and 2 of the SSB burst set periodicity.

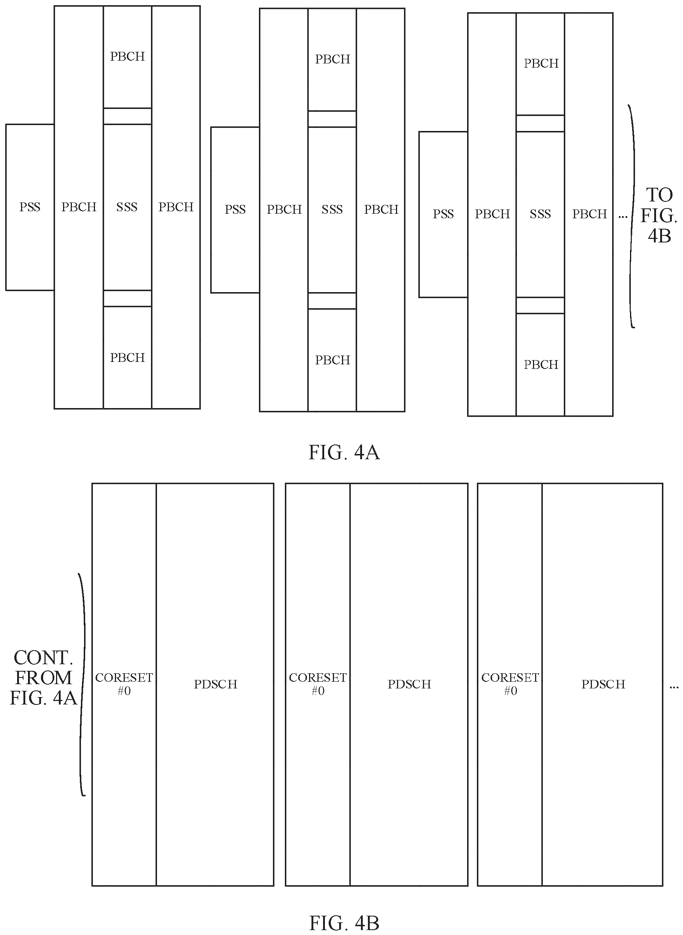

In addition, this application provides a new SSB scanning pattern, to adapt to an NTN scenario. An SSB scanning pattern (pattern) in NR is shown in FIG. 4A and FIG. 4B. To be specific, a satellite base station continuously sends SSBs in different directions by using beams, to complete scanning of the coverage area. After scanning of all the SSBs is completed, the satellite base station sequentially sends CORESETs #0 corresponding to all the SSBs and a SIB1 carried on a physical downlink shared channel (physical downlink shared channel, PDSCH).

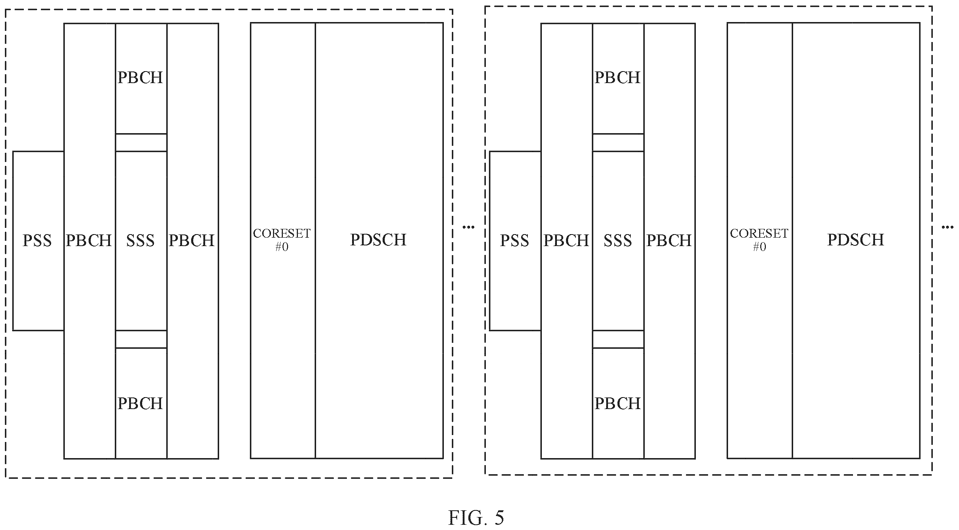

A form of an SSB pattern in the NTN system provided in this application is shown in FIG. 5. In the NTN system, a broadcast beam needs to complete sending of a broadcast signal in a service time of each beam position, and after sending an SSB in each beam position, the broadcast beam needs to send a CORESET #0 corresponding to the SSB and a SIB1 carried on a PDSCH, to help a user complete downlink synchronization and obtain related information such as random access. Information carried in the SIB1 includes system information, for example, a system parameter configuration, a random access resource, a beam and frequency configuration, and ephemeris information.

Specific beneficial effects of this solution are as follows: (1) After receiving an SSB, a user of each beam may receive the CORESET #0 and the SIB1 carried on the PDSCH without waiting for a next scanning periodicity, and after obtaining access-related information in the SIB1, send a preamble (preamble) by using an uplink beam, to complete a subsequent access procedure. In this way, an access delay can be reduced. (2) A next beam position is switched to after the SSB, the CORESET #0, and the SIB1 carried on the PDSCH are sent in a beam position. Because a lighting time in a beam position is at an ms level, a beam switching unit of the satellite may have sufficient time to complete beam direction determining, phase calculation of a phase shifter, phase transmission of the phase shifter, and validation on a phase shifter of an antenna at a radio frequency. In other words, a beam switching time does not need to be at an ns level, which facilitates hardware implementation.

In addition, in this application, a parameter of the broadcast beam in the NR system is adapted, to effectively avoid GEO interference and avoid a problem that a broadcast message is invalid.

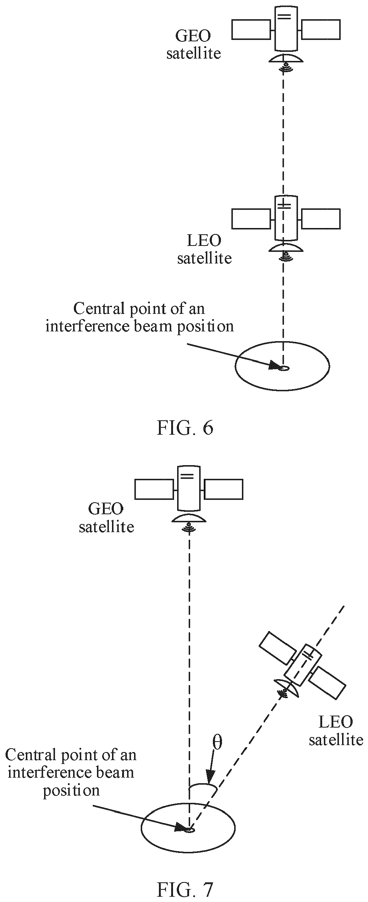

Based on requirements of "Radio Regulations" of the international telecommunication union (international telecommunication union, ITU), when a downlink frequency used by an NGSO user link is a fixed satellite service frequency, no protection requirement (ITU RR No. 5.484A and 4.487A) is imposed on a GEO satellite and no interference is caused to a GEO service. As shown in FIG. 6, when a GEO satellite, an LEO satellite, and a central point of a beam position #1 (that is, the beam position #1 is an interference beam position) form a straight line, a terminal device in the beam position #1 sends an uplink signal to the LEO satellite, and therefore interference is caused to the GEO satellite. The beam position #1 is any beam position in a beam position group k, and the beam position group k corresponds to a broadcast beam k.

To avoid interference to the GEO satellite, the LEO satellite may use three solutions in a broadcast beam scanning phase:

(1) Pre-avoidance solution

The LEO satellite designs an SSB scanning pattern of a broadcast beam to ensure that when the GEO satellite, the LEO satellite, and the central point of the beam position #1 form the straight line, the LEO satellite scans other beam positions but does not find an interference beam position through scanning. In this way, a terminal device in the interference beam position does not send an uplink signal to the LEO satellite, to avoid interference to the GEO satellite. In other words, in a case of the straight line, the LEO satellite scans a beam position #2 by using the broadcast beam k based on an SSB scanning pattern of the broadcast beam k, where the beam position #2 is any beam position in the beam position group k other than the beam position #1.

Optionally, the LEO satellite designs the SSB scanning pattern of the broadcast beam based on information such as a GEO satellite distribution status, a frequency band used by the GEO satellite, and LEO ephemeris information.

(2) The LEO satellite disables a beam.

When an SSB scanning pattern of a broadcast beam is formulated, and a network device predicts that the network device is to run above the beam position #1 and is about to scan an interference beam position, the network device notifies the LEO satellite in advance to disable the broadcast beam k in a scanning time period of the interference beam position.

It may be understood that the network device in this solution is an LEO satellite base station or a network-side device mounted on the LEO satellite.

Optionally, the network side predicts, based on information such as a GEO satellite distribution status, a frequency band used by the GEO satellite, and ephemeris information of the LEO satellite, that the LEO satellite is to run above the beam position #1.

Optionally, notification information of the network device may carry a beam position ID of the beam position #1. The network device sends the beam position ID to the LEO satellite through a feedback link, and the LEO satellite disables a broadcast beam (that is, the beam k) corresponding to the beam position #1.

Optionally, each beam position uses a bit to indicate an ID of a corresponding beam position. For example, there are a total of 32 beam positions, which are numbered from 0. In this case, the beam position may be represented by 5 bits. When the beam position ID is 8, the beam position may be represented by 01000. When the beam position ID is 30, the beam position may be represented by 11110. Details are not described herein.

(3) The LEO satellite indicates a time at which a user sends a physical random access channel (physical random access channel, PRACH).

The LEO satellite still performs broadcasting in a case of the foregoing straight line, but includes first indication information in the broadcast message. The first indication information includes a first time. The first time indicates a time at which UE in the beam position #1 sends a PRACH preamble (preamble) after the first time passes after the UE receives the first indication information. The first time needs to meet a condition that the LEO satellite has deviated from a straight line formed by the GEO satellite and the central point of the interference beam position when the UE sends the PRACH preamble. The first time offset is specifically calculated as follows:

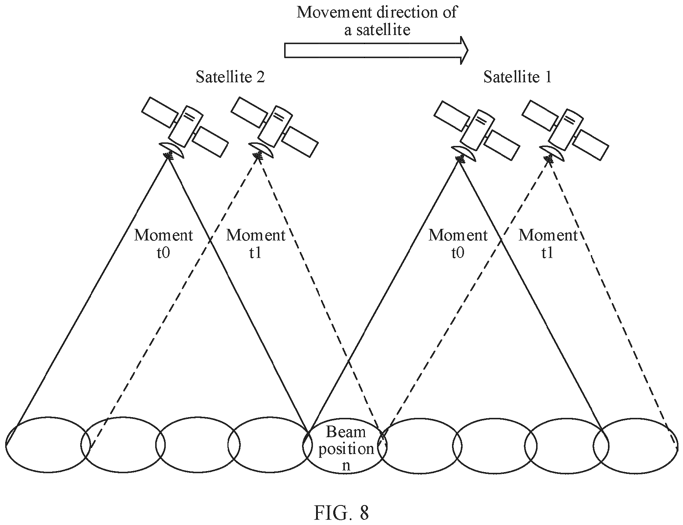

As shown in FIG. 6, at a moment $t_0$, the center of the interference beam position is located in the straight line with the LEO satellite and the GEO satellite, and sending uplink data by the UE causes interference to the GEO satellite. After the LEO satellite runs for a time offset = $t_1$ - $t_0$, $t_1$ is reached. As shown in FIG. 8, in this case, an extension line of a connection line between the central point of the interference beam position and the LEO satellite deviates from the GEO satellite, to form an included angle θ (in a unit of radian). The included angle θ indicates an included angle between connection lines corresponding to the central point of the interference beam position and the LEO satellite at a moment $t_0$ and at a moment $t_1$. To avoid interference to the GEO satellite, the angle θ needs to meet a condition that a signal reaching the GEO satellite is beyond a range of X dB of a receive beam of the GEO satellite. For example, a value of X may be 3.

The following calculates the first time offset based on the included angle θ, and $t = h\theta / v$ may be obtained by using a triangular geometric relationship, where $h$ is an orbit height of the LEO satellite, and $v$ represents a movement velocity of the LEO satellite. For example, if the orbit height is $h = 600$km, the movement velocity is $v = 7.6$km/s, and the included angle is $\theta = 1*2\pi / 360$rad, offset = 1.3779s can be calculated.

Optionally, the network device may notify the UE in the following two manners:

Manner 1: The UE and the GEO satellite agree on the first time in advance.

The LEO satellite sends second indication information to the UE, where the second indication information indicates whether the UE performs interference avoidance on the GEO satellite. A specific interference avoidance operation is that when receiving the second indication information, if avoidance is required, the UE needs to send a PRACH preamble after the first time.

Optionally, the network device adds a GSO interference avoidance field (that is, an example of the second indication information) to a SIB1 message. For example, the field occupies 1 bit, where 0 indicates that interference is not avoided, and 1 indicates that interference is avoided, or vice versa. In this way, when receiving a GSO interference avoidance indication, the UE may use the agreed first time to perform subsequent access of the UE.

Manner 2: The first time is not fixed and may be dynamically adjusted.

Optionally, n-bit quantization is performed on the first time, and the first indication information indicates quantized first time. For example, quantization is performed by using a function offset_quan = quantizer(offset_ unquan,n), where offset_unquan is the first time calculated by the network device, and offset quan represents the first time on which n-bit quantization is performed.

Optionally, the LEO satellite may also maintain a table, and determine, based on the first time, an index corresponding to the first time. The first indication information indicates the index corresponding to the first time.

Finally, the coverage area of the satellite changes with movement of the satellite. If the satellite performs broadcasting and sends an SSB to UE in a beam position at a coverage edge, because the satellite moves, when the satellite sends a random access response (random access response) to the UE, a case in which the UE cannot receive the RAR because the beam position in which the UE is located is not in the coverage area of the satellite may occur. For example, as shown in FIG. 8, at a moment t0, a satellite 1 may perform SSB broadcast on a beam position n, and then complete sequential scanning of other beam positions in the coverage area. Then, a user in the beam position n sends a preamble to the satellite by using an uplink beam, and waits to receive, at a moment t1, a RAR delivered by the satellite 1. However, at the moment t1, due to movement, a coverage area of the satellite 1 is changed, and the satellite 1 cannot send the RAR to UE in the beam position n. Therefore, access of the UE in the beam position n fails, access is re-initiated, and a satellite 2 may be accessed. It can be learned that the SSB sent by the satellite 1 to the beam position n at the moment t0 is invalid.

Therefore, to prevent the satellite from sending an invalid SSB, two solutions may be used:

Solution 1: Disable the beam: When an SSB scanning pattern of a broadcast beam is formulated, and a network device predicts that an SSB sent by the LEO satellite in the beam position n is invalid, the network device notifies, in advance, the LEO satellite to disable a broadcast beam corresponding to the beam position n.

Optionally, notification information of the network device may carry a beam position ID of the beam position n. The network device sends the beam position ID to the LEO satellite through a feedback link.

It may be understood that the network device in this solution is an LEO satellite base station or a network-side device mounted on the LEO satellite.

Solution 2: Change a beam direction: A scanning direction of a broadcast beam is changed, a beam position in a non-edge coverage area is scanned, and a broadcast beam in an edge beam position (for example, the beam position n in FIG. 8) that is gradually away from the satellite is not scanned. In this way, a quantity of beam positions served by the broadcast beam is reduced, so that the satellite can be prevented from sending an invalid SSB, a scanning periodicity of a corresponding broadcast beam can be reduced, and an access delay of the UE can be shortened.

It should be noted that the solutions provided in the foregoing embodiments may be separately used, or may be used in combination with each other. This is not specifically limited in this application.

The foregoing describes in detail the broadcast beam scanning method provided in this application. The following describes a communication apparatus provided in this application.

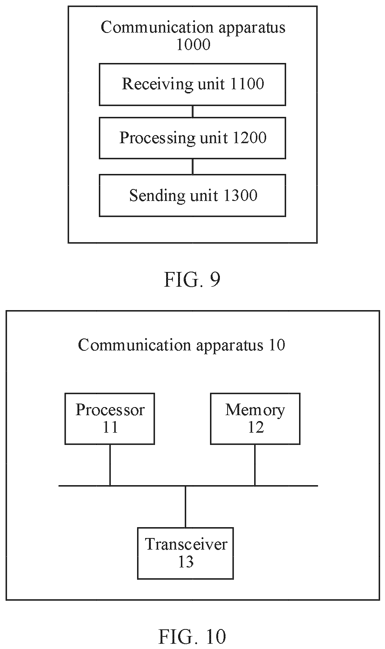

FIG. 9 is a schematic block diagram of a communication apparatus 1000 according to this application. The communication apparatus 1000 includes a processing unit 1200 and a sending unit 1300. The communication apparatus 1000 may implement steps or procedures performed by the satellite corresponding to the foregoing method embodiment. For example, the communication apparatus 1000 may be a satellite, or may be a chip or a circuit configured in the satellite. The processing unit 1200 is configured to perform a processing-related operation of the satellite in the foregoing method embodiment, and the sending unit is configured to perform a sending-related operation of the satellite in the foregoing method embodiment.

The processing unit 1200 is configured to divide all beam positions in a coverage area of the satellite into K beam position groups based on population density of the beam positions in the coverage area of the satellite, where the K beam position groups are in a one-to-one correspondence with K broadcast beams of the satellite, K is an integer greater than 1, a quantity of beam positions included in a first beam position group is inversely proportional to population density in the first beam position group, the first beam position group is any one of the K beam position groups, and the first beam position group includes at least one beam position. The sending unit 1300 is configured to sequentially perform SSB beam scanning on the beam positions in the first beam position group by using a first broadcast beam corresponding to the first beam position group.

Optionally, the processing unit 1200 is further configured to re-plan a mapping relationship between the K broadcast beams and all the beam positions in the coverage area of the satellite based on the population density in the coverage area of the satellite and/or access success rates of beam positions corresponding to the K broadcast beams.

Optionally, the processing unit 1200 is specifically configured to: when a change ratio of population density in a coverage area corresponding to the first beam position group at a moment t1 to that at a moment t0 is greater than or equal to a first threshold, re-plan the mapping relationship between the K broadcast beams and all the beam positions in the coverage area of the satellite, where t1 is greater than t0.

Optionally, the sending unit 1300 is specifically configured to send a first broadcast signal in a first beam position by using the first broadcast beam, where the first broadcast signal includes a first SSB, a CORESET #0 corresponding to the first SSB, and a physical downlink shared channel PDSCH, and the first beam position is any beam position in the first beam position group.

Optionally, when the satellite, a first satellite, and a central point location of the first beam position form a straight line, where the satellite is a non-geosynchronous orbit NGSO satellite, the first satellite is a geostationary orbit GEO satellite, and the first beam position is any beam position in the first beam position group, the sending unit 1300 is further configured to perform SSB beam scanning on a second beam position in the first beam position group by using the first broadcast beam, where the second beam position and the first beam position are different beam positions. Alternatively, the processing unit 1200 is further configured to disable the first broadcast beam in a time period of scanning the first beam position. Alternatively, the sending unit 1300 is further configured to send first indication information to a terminal device in the first beam position, where the first indication information includes a first time, and the first time indicates the terminal device to send a random access preamble after the first time passes after the terminal device receives the first indication information.

Optionally, the processing unit 1200 predicts that an SSB sent by using the first broadcast beam in the first beam position is an invalid SSB, and the first beam position is any beam position in the first beam position group. The processing unit 1200 is further configured to disable the first broadcast beam in the time period of scanning the first beam position. Alternatively, the sending unit 1300 is further configured to perform SSB beam scanning on a beam position in the first beam position group other than the first beam position by using the first broadcast beam.

Optionally, the communication apparatus 1000 further includes a receiving unit 1100. The receiving unit 1100 is configured to perform a receiving-related operation of the satellite in the foregoing method embodiment.

Optionally, the sending unit 1300 and the receiving unit 1100 may also be integrated into a transceiver unit that has both a receiving function and a sending function. This is not limited herein.

Optionally, in an implementation in which the communication apparatus 1000 may be the satellite in the method embodiment, the sending unit 1300 may be a transmitter, and the receiving unit 1100 may be a receiver. The receiver and the transmitter may alternatively be integrated into a transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs operations and/or processing performed by the satellite in the method embodiments. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 1000 may be a chip or an integrated circuit installed in the satellite, the sending unit 1300 and the receiving unit 1100 may be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

FIG. 10 is a schematic diagram of a structure of a communication apparatus 10 according to this application. The apparatus 10 includes a processor 11. The processor 11 is coupled to a memory 12, the memory 12 is configured to store a computer program or instructions and/or data, and the processor 11 is configured to: execute the computer program or the instructions stored in the memory 12, or read the data stored in the memory 12, to perform the method in the foregoing method embodiments.

Optionally, there are one or more processors 11.

Optionally, there are one or more memories 12.

Optionally, the memory 12 and the processor 11 are integrated together, or are disposed separately.

Optionally, as shown in FIG. 10, the apparatus 10 further includes a transceiver 13, and the transceiver 13 is configured to: receive and/or send a signal. For example, the processor 11 is configured to control the transceiver 13 to receive and/or send a signal.

In a solution, the apparatus 10 is configured to implement operations performed by the satellite in the foregoing method embodiments. For example, the processor 11 is configured to execute the computer program or the instructions stored in the memory 12, to implement related operations performed by the satellite in the foregoing method embodiments, for example, implement the method performed by the satellite in the embodiment shown in FIG. 2.

In addition, this application further provides a computer-readable storage medium. The computer-readable storage medium stores computer instructions. When the computer instructions are run on a computer, operations and/or procedures performed by the satellite in the method embodiments of this application are performed.

This application further provides a computer program product. The computer program product includes computer program code or instructions. When the computer program code or the instructions are run on a computer, operations and/or procedures performed by the satellite in the method embodiments of this application are performed.

In addition, this application further provides a chip, and the chip includes a processor. A memory configured to store a computer program is disposed independent of the chip. The processor is configured to execute the computer program stored in the memory, to perform an operation and/or processing performed by the satellite in any method embodiment.

Further, the chip may include a communication interface. The communication interface may be an input/output interface, an interface circuit, or the like. Further, the chip may include a memory.

It should be understood that the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification is intended to include, but is not limited to, these memories and any memory of another proper type.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A broadcast beam scanning method, comprising:

   dividing, by a satellite, all beam positions in a coverage area of the satellite into K beam position groups based on population density of the beam positions in the coverage area of the satellite, wherein the K beam position groups are in a one-to-one correspondence with K broadcast beams of the satellite, K is an integer greater than 1, a quantity of beam positions comprised in a first beam position group is inversely proportional to population density in a coverage area of the first beam position group, the first beam position group is any one of the K beam position groups, and the first beam position group comprises at least one beam position; and
   sequentially performing, by the satellite, beam scanning on the beam positions in the first beam position group by using a first broadcast beam corresponding to the first beam position group.

2. The method according to claim 1, wherein a quantity of broadcast beam scanning periodicities maintained by the satellite is greater than or equal to 1 and less than or equal to K, a scanning periodicity of the first broadcast beam is m*t, m is the quantity of beam positions comprised in the first beam position group, t is a time required for scanning one beam position by using the first broadcast beam, and t is greater than 0.

3. The method according to claim 1 or 2, wherein the method further comprises:

re-planning, by the satellite, a mapping relationship between the K broadcast beams and all the beam positions in the coverage area of the satellite based on the population density in the coverage area of the first beam position group and/or a success rate of accessing the satellite in the beam positions in the first beam position group.

4. The method according to claim 3, wherein the re-planning, by the satellite, a mapping relationship between the K broadcast beams and all the beam positions of the satellite based on the population density in the coverage area of the satellite comprises:

when a change ratio of population density in a coverage area corresponding to the first beam position group at a moment t1 to that at a moment t0 is greater than or equal to a first threshold, re-planning, by the satellite, the mapping relationship between the K broadcast beams and all the beam positions in the coverage area of the satellite, wherein t1 is greater than t0.

5. The method according to any one of claims 1 to 4, wherein a synchronization signal block SSB burst set periodicity of the first broadcast beam is greater than or equal to the scanning periodicity of the first broadcast beam.

6. The method according to claim 5, wherein the SSB burst set periodicity of the first broadcast beam is predefined in a protocol.

7. The method according to any one of claims 1 to 6, wherein the sequentially performing, by the satellite, beam scanning on the beam positions in the first beam position group by using a first broadcast beam corresponding to the first beam position group comprises:

sending, by the satellite, a first broadcast signal in a first beam position by using the first broadcast beam, wherein the first broadcast signal comprises a first synchronization signal block SSB, a CORESET #0 corresponding to the first SSB, and a physical downlink shared channel PDSCH, and the first beam position is any beam position in the first beam position group.

8. The method according to any one of claims 1 to 7, wherein when the satellite, a first satellite, and a central point location of the first beam position form a straight line, wherein the satellite is a non-geosynchronous orbit NGSO satellite, the first satellite is a geostationary orbit GEO satellite, and the first beam position is any beam position in the first beam position group, the method further comprises:

performing, by the satellite, beam scanning on a second beam position in the first beam position group by using the first broadcast beam, wherein the second beam position and the first beam position are different beam positions; or

disabling, by the satellite, the first broadcast beam in a time period of scanning the first beam position; or

sending, by the satellite, first indication information to a terminal device in the first beam position, wherein the first indication information comprises a first time, and the first time indicates the terminal device to send a random access preamble after the first time passes after the terminal device receives the first indication information.

9. The method according to any one of claims 1 to 8, wherein the satellite predicts that a synchronization signal block SSB sent by using the first broadcast beam in the first beam position is an invalid SSB, the first beam position is any beam position in the first beam position group, and the method further comprises:

disabling, by the satellite, the first broadcast beam in the time period of scanning the first beam position; or

performing, by the satellite, beam scanning on a beam position in the first beam position group other than the first beam position by using the first broadcast beam.

10. A communication apparatus, comprising:

a processing unit, configured to divide all beam positions in a coverage area of a satellite into K beam position groups based on population density of the beam positions in the coverage area of the satellite, wherein the K beam position groups are in a one-to-one correspondence with K broadcast beams of the satellite, K is an integer greater than 1, a quantity of beam positions comprised in a first beam position group is inversely proportional to population density in the first beam position group, the first beam position group is any one of the K beam position groups, and the first beam position group comprises at least one beam position; and

a sending unit, configured to sequentially perform beam scanning on the beam positions in the first beam position group by using a first broadcast beam corresponding to the first beam position group.

11. The apparatus according to claim 10, wherein a quantity of broadcast beam scanning periodicities maintained by the processing unit is greater than or equal to 1 and less than or equal to K, a scanning periodicity of the first broadcast beam is m*t, m is the quantity of beam positions comprised in the first beam position group, t is a time required for scanning one beam position by using the first broadcast beam, and t is greater than 0.

12. The apparatus according to claim 10 or 11, wherein the processing unit is further configured to re-plan a mapping relationship between the K broadcast beams and all the beam positions in the coverage area of the satellite based on the population density in a coverage area of the first beam position group and/or a success rate of accessing the satellite in the beam positions in the first beam position group.

13. The apparatus according to claim 12, wherein the processing unit is specifically configured to:
when a change ratio of population density in a coverage area corresponding to the first beam position group at a moment t1 to that at a moment t0 is greater than or equal to a first threshold, re-plan the mapping relationship between the K broadcast beams and all the beam positions in the coverage area of the satellite, wherein t1 is greater than t0.

14. The apparatus according to any one of claims 10 to 13, wherein an SSB burst set periodicity of the first broadcast beam is greater than or equal to the scanning periodicity of the first broadcast beam.

15. The apparatus according to claim 14, wherein the synchronization signal block SSB burst set periodicity of the first broadcast beam is predefined in a protocol.

16. The apparatus according to any one of claims 10 to 15, wherein the sending unit is specifically configured to:
send a first broadcast signal in a first beam position by using the first broadcast beam, wherein the first broadcast signal comprises a first synchronization signal block SSB, a CORESET #0 corresponding to the first SSB, and a physical downlink shared channel PDSCH, and the first beam position is any beam position in the first beam position group.

17. The apparatus according to any one of claims 10 to 16, wherein when the satellite, a first satellite, and a central point location of the first beam position form a straight line, wherein the satellite is a non-geosynchronous orbit NGSO satellite, the first satellite is a geostationary orbit GEO satellite, and the first beam position is any beam position in the first beam position group,

the sending unit is further configured to perform beam scanning on a second beam position in the first beam position group by using the first broadcast beam, wherein the second beam position and the first beam position are different beam positions; or
the processing unit is further configured to disable the first broadcast beam in a time period of scanning the first beam position; or
the sending unit is further configured to send first indication information to a terminal device in the first beam position, wherein the first indication information comprises a first time, and the first time indicates the terminal device to send a random access preamble after the first time passes after the terminal device receives the first indication information.

18. The apparatus according to any one of claims 10 to 17, wherein the processing unit predicts that a synchronization signal block SSB sent by using the first broadcast beam in the first beam position is an invalid SSB, and the first beam position is any beam position in the first beam position group;

the processing unit is further configured to disable the first broadcast beam in the time period of scanning the first beam position; or
the sending unit is further configured to perform beam scanning on a beam position in the first beam position group other than the first beam position, by using the first broadcast beam.

19. A communication apparatus, wherein the communication apparatus comprises at least one processor and at least one memory, the at least one memory is configured to store a computer program or instructions, and the at least one processor is configured to execute the computer program or the instructions in the memory, so that the method according to any one of claims 1 to 9 is performed.

20. A computer-readable storage medium, wherein the computer-readable storage medium stores computer instructions, and when the computer instructions are run on a computer, the method according to any one of claims 1 to 9 is performed.

21. A computer program product, wherein the computer program product comprises computer program code, and when the computer program code is run on a computer, the method according to any one of claims 1 to 9 is performed.

FIG. 1

S201. A satellite divides all beam positions in a coverage area of the satellite into K beam position groups based on population density of the beam positions in the coverage area of the satellite, where the K beam position groups are in a one-to-one correspondence with K broadcast beams of the satellite

S202. The satellite sequentially performs beam scanning on beam positions in a first beam position group by using a first broadcast beam corresponding to the first beam position group

FIG. 2

Broadcast beam 1

Broadcast beam 2

Beam position of a land area

Beam position of an ocean area

FIG. 3

| PSS | PBCH | PBCH | SSS | PBCH | PSS | PBCH | PBCH | SSS | PBCH | PSS | PBCH | PBCH | SSS | PBCH | ... | TO FIG. 4B |

FIG. 4A

CONT. FROM FIG. 4A

| CORESET #0 | PDSCH | CORESET #0 | PDSCH | CORESET #0 | PDSCH | ... |

FIG. 4B

FIG. 5

GEO
satellite

LEO
satellite

Central point of an
interference beam position

FIG. 6

GEO
satellite

LEO
satellite

θ

Central point of an
interference beam
position

FIG. 7

Movement direction of
a satellite

Satellite 2

Satellite 1

Moment
t0

Moment
t1

Moment
t0

Moment
t1

Beam
position
n

FIG. 8

Communication apparatus
1000

Receiving unit 1100

Processing unit 1200

Sending unit 1300

FIG. 9

Communication apparatus 10

Processor
11

Memory
12

Transceiver
13

FIG. 10

# EP 4 426 034 A1

## INTERNATIONAL SEARCH REPORT

International application No.

**PCT/CN2022/132938**

### A. CLASSIFICATION OF SUBJECT MATTER

H04W 72/04(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNABS, ENTXT, WOTXT, VEN: 波束, 波位, 波位组, 广播, 广播波束, 密度, 扫描, 卫星, beam, wave, boradcast, Satellite, wave-bit, density, scan

### C. DOCUMENTS CONSIDERED TO BE RELEVANT

| Category* | Citation of document, with indication, where appropriate, of the relevant passages | Relevant to claim No. |
|---|---|---|
| A | CN 112383346 A (BEIJING KONGLING NETTECH TECHNOLOGY CO., LTD.) 19 February 2021 (2021-02-19) <br> entire document | 1-21 |
| A | CN 112910541 A (HWA INTELLIGENCE (CHENGDU) INTEGRATED CIRCUIT CO., LTD.) 04 June 2021 (2021-06-04) <br> entire document | 1-21 |
| A | WO 0054432 A1 (MOTOROLA, INC.) 14 September 2000 (2000-09-14) <br> entire document | 1-21 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 February 2023** | **16 February 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/132938**

| Patent document cited in search report | | | Publication date (day/month/year) | Patent family member(s) | | | Publication date (day/month/year) |
|---|---|---|---|---|---|---|---|
| CN | 112383346 | A | 19 February 2021 | None | | | |
| CN | 112910541 | A | 04 June 2021 | None | | | |
| WO | 0054432 | A1 | 14 September 2000 | EP | 1076942 | A1 | 21 February 2001 |
| | | | | EP | 1076942 | B1 | 27 July 2005 |
| | | | | DE | 60021489 | D1 | 01 September 2005 |
| | | | | DE | 60021489 | T2 | 24 May 2006 |
| | | | | AU | 3498700 | A | 28 September 2000 |
| | | | | JP | 2002539670 | A | 19 November 2002 |
| | | | | US | 6366775 | B1 | 02 April 2002 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111449656